# EUROPEAN PATENT SPECIFICATION

(11) **EP 3 007 558 B1**
(45) Date of publication and mention of the grant of the patent: **06.02.2019**
(21) Application number: 13814853.1
(22) Date of filing: 05.12.2013
(51) Int. Cl.: A01N 59/16, A01N 59/20, A01N 25/10, A01N 25/34, B22F 1/02, A01P 1/00

(54) **METHOD FOR SURFACE MODIFICATION WITH NANOCOMPOSITES, NANOCOMPOSITE MATERIAL AND THE USE THEREOF**
VERFAHREN ZUR OBERFLÄCHENMODIFIZIERUNG MIT NANOKOMPOSITEN, NANOKOMPOSITMATERIAL UND VERWENDUNG DAVON
PROCEDE POUR UNE MODIFICATION DE SURFACE A L'AIDE DES NANOCOMPOSITES, MATERIAU NANOCOMPOSITE ET LEUR UTILISATION

(30) Priority: 10.06.2013 PL 40425713
(43) Date of publication of application: 20.04.2016
(73) Proprietor: Instytut Chemii Fizycznej Polskiej Akademii Nauk, 01-224 Warszawa (PL)
(72) Inventor: WYBRANSKA, Katarzyna, PL-31-142 Krakow (PL); PACZESNY, Jan, PL-68-200 Zary (PL); FIALKOWSKI, Marcin, PL-01-006 Warszawa (PL); HOLYST, Robert, PL-02-703 Warszawa (PL)
(74) Representative: Dargiewicz, Joanna
(86) International application number: PCT/EP2013/075709
(87) International publication number: WO 2014/198352

(56) References cited:
- EP-A1- 2 380 687
- WO-A1-2008/015453
- WO-A2-2009/063508
- WO-A2-2012/033893
- WO-A2-2012/059943
- WO-A2-2012/059944
- CN-A- 1 742 582
- US-A1- 2009 148 484
- US-A1- 2011 262 646

## Description

The invention relates to a method for surface modification with nanocomposites, a nanocomposite material and the use thereof. In particular, the method relies on a single step procedure involving controlled polymerisation of oxoborates in the presence of metallic nanoparticles and the surface to be modified, with formation of a nanocomposite material containing metallic nanoparticles and polyoxoborates deposited on a hydrophilic surface, i.e., one containing groups such as -OH or -COOH, or on a hydrophobic surface. The material according to the present invention displays bactericidal properties, at the same time being entirely harmless for mammalian cells.

In line with rapid progress in miniaturisation of electronic devices in recent decades, dynamic development of physical chemistry of surfaces and intensified work on technologies based on quantum phenomena, nanoparticles gain more and more in importance - both for research and for industry. Nanoparticles are particles with at least one of the dimensions of 100 nanometres or less, composed of a few up to over a dozen thousand of atoms, often spherical in shape. Their properties, and consequently their possible applications, essentially deviate from those displayed by the same substances in the form of less fine particles. As a rule, nanoparticles are coated with a stabilising layer to prevent non-controlled aggregation and formation of large volume structures (aggregates) due to high surface energy of nanoparticles. Usually, organic molecules, e.g., alkanethiols, are used for the stabilisation of nanoparticles.

In the present patent application, nanoparticles are stabilised with inorganic ions that are formed in reactions occurring during the synthesis of nanoparticles. In the literature, such nanoparticles are commonly referred to as "bare" ones, as they do not contain any stabilising organic ligand. The selection and modification of ligands surrounding the metallic or the semiconductor core of nanoparticles provide an opportunity to control their properties.

Gold nanoparticles are one of the most stable metallic nanoparticles. Due to unique optical and electrical properties, strictly related to their size and shape, gold nanoparticles are widely used in materials chemistry, catalysis, medicine, or biology. The colloidal gold first appeared probably as early as around fifth or fourth century B.C. in Egypt and China. In the antiquity, colloidal gold was used for aesthetic and for curative purposes. It was used for staining glass and colouring ceramics. Perhaps the most famous example is the Lycurgus Cup that was manufactured around fifth to fourth century B.C. Because of the presence of gold nanoparticles it is red in transmitted light and green in dispersed light. The first publication on gold nanoparticles was published in 1618 by Francisci Antonii. His book contains information on the synthesis of colloidal gold and its use in medicine. It was believed that colloidal gold could be used in treatment of various diseases including dysentery, epilepsy, cancer diseases, heart diseases and venereal diseases. In 1676 German chemist Johann Kunckels published another book, where he concluded that "gold must be present in such a degree of comminution that it is not visible to human eye". In her book published in 1794, Fuhlame reported a method for dying silk with colloidal gold. Glass colorant known as the Purple of Cassius is the result of heterocoagulation of gold nanoparticles and titanium dioxide. In 1857 Faraday reported the formation of red solutions of colloidal gold by the reduction of AuCl₄⁻ in a two-phase system of sulphur and CS₂ (Faraday, M. Experimental Relations of Gold (and other Metals) to Light. Philos. Trans. 1857, 147, 145-181*).* In the twentieth century, numerous other methods for producing nanoparticles have been reported *(*Turkevitch, J.; Stevenson, P. C.; Hillier, J. Nucleation and Growth Process in the Synthesis of colloidal gold. Discuss. Faraday Soc. 1951, 11, 55-75*;* Frens, G. Controlled Nucleation for the Regulation of the Particle Size in Monodisperse Gold Suspensions. Nature: Phys. Sci. 1973, 241, 20-22*.;* Hayat, M.A. Colloidal Gold, Principles, Methods and Applications, Academic Press: New York, 1989*),* and the interest in the nanoparticles is growing constantly and is related to their unique properties (quantum size effect) and application opportunities, i.a., in analytical methods, diagnostics and medical therapeutics, in various imaging methods and in the SERS technique - a spectroscopic method making use of the surface enhanced Raman scattering (Chemical Reviews, 2004, Vol. 104, No. 1*;* Journal of Molecular Liquids 155 (2010) 91-95*).*

Nanoparticles used in the method according to the present invention are produced by the reduction of salt of an appropriate metal with borohydride. Compounds of boron and oxygen formed in that reaction (oxoborates) stabilise the surface of nanoparticles and participate in the formation of the nanocomposite.

The boric acid molecule has a planar (flat) structure. Connections created by hydrogen bonds result in an almost hexagonal graphene-like structure (the distance between two adjacent layers is 3.18 Å). When dissolved in water, boric acid behaves like a Lewis acid. In a boric acid solution various types of anions and polyanions composed of basic BO₃ and BO₄ units may coexist. The number of BO₃ and BO₄ groups depends on the pH. In solutions with boron concentration below 0.025 M equilibrium is established that can be depicted using a formula (w.1.). It follows from the equation that equimolar amounts of B(OH)₄⁻ and B(OH)₃ coexist in a solution of pH = 9.4. At lower pH flat BO₃ groups dominate, whereas at higher pH - tetrahedral BO₄ groups prevail.

B(OH)₃+2H₂O = B(OH)₄⁻+H₃O⁺ pKa = 9.4 (w.1)

In more concentrated solutions an equilibrium is established between the non-ionised acid form B(OH)₃ and polynuclear complexes B₃O₃(OH)₄⁻; B₄O₅(OH)₄²⁻; B₃O₃(OH)₅²⁻, B₅O₆(OH)₄⁻, and B(OH)₄⁻. Addition of H⁺ or OH⁻ ions may lead to condensation and formation of polyoxoanions. The process involves charge delocalisation and reduction of formal charge, which in turn result in enhanced hydrophobic properties. The difference between the condensation in an acidic medium, and the condensation in a basic medium consists in the morphology of polyanions formed in this process. In an acidic medium, boric acid molecules tend to form flat networks that subsequently create layers, whereas in a basic medium the condensation leads to formation of amorphous networks. In addition, it is known that the presence of free large bivalent cations results in stabilisation of polyborane structures *(Contemporary Boron Chemistry; Matthew Davidson, Royal Society of Chemistry (Great Britain); Royal Society of Chemistry, 2000* - *538*).

It is also known that oxoborane ions can form strong complexes with OH groups, e.g., in cellulose or polyalcoholates ("*Recent advances in methods of isolating and purifying hemicelluloses" B Lindberg; Trakemiska avdelningen, Svenska Traforskninginstitutet, Stockholm O, Sverige).* No method for modification of hydrophilic materials with gold nanoparticles using the aforementioned property of oxoborates has been, however, reported to date.

Cellulose is a natural polysaccharide composed of glucopyranose units connected by 1,4-glycoside bonds. It is the principal component of cell membranes where it has a supporting function. In plants, cellulose occurs in the form of fibres, often incrusted with other polysaccharides and lignin, lipids, resins or even mineral substances. Purified, bleached and degreased seed-hairs of various species of cotton (e.g., cosmetic cotton wool) are almost pure cellulose ("Naturalne Zwiqzki Organiczne" Aleksander Kotodziejczyk, Wydawnictwo Naukowe PWN, Warszawa 2004, ISBN 83-01-14316-9; " 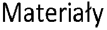 medyczne", Anna Cedro- Niwińska, Renata Jachowicz). Because of the presence of hydrogen bonds, cellulose fibres have amphiphilic properties and are able to form complex structures, for which they are extremely hard to dissolve both in aqueous and in organic solvents. The latter property makes cellulose fibres very hard to modify using conventional approaches (Angew. Chem. Int. Ed. 2008, 47, 9866 - 9869).

In 2007 a method has been reported for the modification of vegetable and bacterial cellulose fibres with gold nanoparticles and gold nanoparticles with SiO₂ shell using the LBL (layer by layer) method. The PDDA polycations absorbed at cellulose with negative surface charge, and subsequently negatively charged nanoparticles produced by the reduction with sodium citrate adsorbed at the PDDA polycations (R.J.B. Pinto et al., Journal of Colloid and Interface Science 312 (2007) 506-512).

In 2009 a method has been reported for the modification of cellulose fibres with metallic gold, platinum and palladium nanoparticles using electrostatic interactions between the negatively charged nanoparticles and the cation-modified ammonium groups in cellulose. The modification process lasted for about 24 hours and resulted in a loss of nanoparticles that did not adsorb at fibres and were washed out in the purification process (gold nanoparticles obtained by the reduction of chloroauric(I) ions with citrate were used). (Metal Nanoparticles on Natural Cellulose Fibers: Electrostatic Assembly and In Situ Synthesis. Hong Dong, Juan P. Hinestroza; Applied Materials&Interfaces, vol.1, no.4, 797-803; 2009).

Methods are also known that use cellulose micro-fibres and oligomers as well as cellulose derivatives for the stabilisation of colloidal solutions of nanoparticles (A.I. Loskutov, O.Ya. Uryupina, V.V. Vysotskii, V.I. Roldughin, 2009, published in Kolloidnyi Zhurnal, 2009, Vol. 71, No. 5, pp. 652-656*.;* T. Ishida et al./Applied Catalysis A: General 377 (2010) 42-46*);* S. Boufi et al./ Carbohydrate Polymers 86 (2011) 1586-1594*).* An example is provided by nanoparticles of about 30 nm in size that are obtained in the presence of methylcellulose by the reduction of chlorauric(I) ions with hydrogen gas (G.P. Sahoo et al. /Journal of Molecular Liquids 155 (2010) 91-95*)* or nanoparticles synthesised in situ in a 80% aqueous solution of N-methylmorpholine-N-oxide (NMMO) at 100°C in the presence of TSC-cellulose (cellulose thiosemicarbazones). The authors of the latter publication postulate that other carbohydrates, including chitosan, cellohexose, cellobiose, maltose and lactose, can be used in the proposed method (Angew. Chem. Int. Ed. 2008, 47, 9866 - 9869).

There are also known methods for fabricating antibacterial materials based on nanoparticles-modified cellulose. Typically, such methods make use of silver nanoparticles *(*WK. Son et al. / Carbohydrate Polymers 65 (2006) 430-434; W.-L. Chou, D.-G. Yu and M.-C. Yang, Polym. Adv. Technol. 2005; 16: 600-607; A. Fernández et al. / Food Research International 42 (2009) 1105-1112; *"*Effect of cationization on adsorption of silver nanoparticles on cotton surfaces and its antibacterial activity" Mohammad Shateri Khalil-Abad, Mohammad Esmail Yazdanshenas, Mohammad Reza Nateghi; Cellulose (2009) 16:1147-1157), but copper nanoparticles-based materials are also known *(*Copper-Based Nanostructured Coatings on Natural Cellulose: Nanocomposites Exhibiting Rapid and Efficient Inhibition of Multi-Drug Resistant Wound Pathogen, A. baumannii, and "Mammalian Cell Biocompatibility In Vitro" Adv. Funct. Mater. 2011, 21, 2506-2514*)*.

Bactericidal properties of gold nanoparticles and gold nanocomposites are known *("*Enhancement of antibiotic effect via gold:silver-alloy nanoparticles" Margarida Moreira dos Santos, Margarida Joao Queiroz, Pedro V. Baptista, J Nanopart Res (2012) 14:859; "Toxicity and cellular uptake of gold nanoparticles: what we have learned so far?" Alaaldin M. Alkilany, Catherine J. Murphy, J Nanopart Res (2010) 12:2313-2333).

A 2012 publication reported modification of a cellulose membrane with gold nanoparticles. The method disclosed relies on separating AuCl₄⁻ and NaBH₄ solutions with a membrane. Due to the diffusion gradient, smaller negatively charged borohydride ions migrate faster through the membrane and successively reduce gold ions attached to the surface of the membrane on the other side due to electrostatic interactions (cellulose is able to bind positively charged metal ions). The method (unlike that in the method according to the present invention) relies on the in situ synthesis of nanoparticles on the surface of a cellulose membrane *(*N. Sosibo et al. /Materials Letters 88 (2012) 132-135*).*

Boron compounds were used for modifications of cellulose as early as in the 1940's. A patent document US2300213(A) discloses the use of boron fluoride for production of cellulose esters (e.g., cellulose acetate). The authors of the invention point to resistance towards decolouration as an essential advantage of such modifications. The method has been improved in subsequent years, as disclosed in the patent applications: US2554439(A) from 1952 and US3313592(A) from 1967. A 1973 patent US3765836(A) discloses the use of borates and boric acid for modifying materials containing cellulose to obtain crease-resistant fabrics.

WO2012/059944(A2) discloses an aqueous dispersion of nanoparticles and its use in the treatment of fabrics.

Known is also the use of boron compounds for production of fire resistant coatings. Already a 1974 patent US3790562(A) disclosed the use of alkoxyboron for cellulose modification with the objective to make it fire resistant. In 1976, simpler and cheaper borates were used for production of fire resistant fillers. The patent US6025027(A) discloses the use of borates for producing cellulose-based insulating materials.
The patent WO2002028796(A2) discloses a process for preparing a binder from cellulose fibres saturated with organic and inorganic compounds. These additions do not form nanoparticles. Known are also composite materials of cellulose and metal micro- and nanoparticles, metal oxide nanoparticles, nanoparticles of other semiconductors and their mixtures. A 1982 patent US4326889(A) discloses a method for preparing a composite of cellulose and gold microparticles (from 0.8 to 2 µm) as a dental base for placing porcelain layer. The patents WO2007023002(A1) and US20110262646(A1) relate to composite materials, wherein nanoparticles are non-covalently adsorbed on a cellulose surface. The patents WO2009080522(A1), WO2009063508(A2), and WO2010095574(A1) disclose methods for synthesising nanoparticles in the presence of cellulose.
The patent US20080145576(A1) relates to a method for preparing food casings, primarily synthetic casings for Vienna sausages, sausages and other meat products. Derivatized cellulose is doped with nanoparticles. The authors suggest that it guarantees sure antibacterial action and allows for longer storage of food products.
All the methods for combining cellulose with nanoparticles disclosed to date rely upon prior modification of ligands on a nanoparticle or chemical modification of the cellulose, and subsequent combination of the two components usually relies on electrostatic interactions. The methods disclosed to date do not mention the role of oxoborates in the formation of durable connections between nanoparticles, as well as between nanoparticles and other materials containing hydrophilic groups, i.e., -OH and COOH.

According to the present invention there is provided a method for producing and depositing nanocomposites made of metallic nanoparticles, in particular gold, silver, copper, nickel, cobalt or mixture of these nanoparticles, and oxoborates on hydrophilic (in particular containing -OH and -COOH groups) and hydrophobic surfaces.
According to another aspect of the present invention, there is provided a new nanocomposite material with antiseptic properties. It is unexpected that the proposed material has bactericidal properties, and simultaneously is entirely harmless for mammalian cells.
Therefore, according to yet another aspect of the present invention, there is provided the use of the proposed nanocomposite material for producing antiseptic materials, and in particular for coating surfaces of various materials with this nanocomposite material, e.g., polymers (Petri dishes, implants, scaffolds for cell growth), glasses (glass cells, glass fibres), metals (medical equipment, implants), or cotton (bandages, threads).
According to the present invention, the method for surface modification with nanocomposites containing metallic nanoparticles and boron compounds is characterised in that the selected solid substance comprising the surface to be modified is placed in a colloidal solution of metallic nanoparticles stabilised with boron compounds, namely oxoborates, and subsequently the oxoborates are polymerised/condensed by induction of a pH change by adding an acid or a base, or by addition of bivalent or trivalent metal salts, in particular Mg, Ca, Cu, Fe, Cr, Au, Hg, or Pb salts, which results in formation of nanocomposites from metallic nanoparticles and polyoxoborates adsorbed on the material used.
Preferably, the material used for solid surface modification is selected from the group comprising passivated silicon, quartz, glass, metal, stainless steel, glass wool, glass fibre, paper, cosmetic cotton wool, cotton fabric and pure cellulose.
Preferably, metallic nanoparticles used are gold, silver, copper, nickel, cobalt, platinum nanoparticles or mixtures of these nanoparticles, and preferably gold, silver nanoparticles or mixtures thereof.
Preferably, gold nanoparticles are used that were obtained in a synthesis consisting in the reduction of chloroauric(I) ions with sodium borohydride, most preferably obtained in the Martin synthesis.

Alternatively, preferably, silver nanoparticles are used, preferably obtained by the reduction of silver nitrate with sodium borohydride.

Preferably, as the acid, organic or inorganic acids are used, preferably HCI, and as the base, organic and inorganic bases are used, preferably NaOH.

Preferably, as the bivalent metal salt, CuSO₄ or CaCl₂ are used, and as the trivalent metal salt FeCl₃ is used.

Preferably, the amount of nanoparticles in nanocomposites deposited on the surface being modified is controlled by changing the volume of colloidal solution of nanoparticles that is added during the modification process.
Preferably, the amount of nanocomposites deposited on the surface being modified is controlled in the modification process either by changing the pH in the range from above 0 to 10, preferably from above 0 to 4, and most preferably below 2, or by changing concentration of the colloidal solution of nanoparticles.

Preferably, the process is carried out at temperature ranging from 0°C to 100°C, preferably at room temperature.

The invention comprises also a nanocomposite material obtained with the aforementioned method, characterised in that it comprises metal nanoparticles embedded in a polyoxoborane matrix, whereas the surface of at least some of these nanoparticles is exposed.

Preferably, the polyoxoborane matrix is porous.

Preferably, the metal nanoparticles are located on the surface of the polyoxoborane matrix.

Preferably, the said metal nanoparticles comprise nanoparticles of one or more of the following metals: gold, silver, copper, nickel, cobalt, platinum, and preferably gold or silver.

Preferably, the material additionally comprises atoms of one or more bi- or trivalent metals, and in particular atoms of one of the following metals: Mg, Ca, Cu, Fe, Cr, Au, Hg, Pb.

Preferably, the material is in the form of a layer deposited on a substrate, in particular on the substrate selected from the group comprising: passivated silicon, silica, quartz, glass, metal, stainless steel, glass wool, glass fibre, paper, cosmetic cotton wool, cotton fabric, natural polymers, in particular cellulose, carrageenan, pectin and chitosan, synthetic polymers, in particular polystyrene, poly-HEMA.

In such a case, preferably, the said layer deposited on the substrate is discontinuous, i.e., it comprises at least one crack running from the edge of the layer to the uncovered fragment of the substrate.

Preferably, the thickness of the said layer deposited on the substrate is minimum 3 nm, more preferably from 3 nm to 100 nm, and most preferably from 3 nm to 5 nm.

Preferably, the substrate coverage by the said layer is less than 100%, which means that at least a part of the substrate is uncovered.

The invention comprises also the use of the above nanocomposite material in fabrication of antiseptic surfaces and in fabrication of surfaces intended for use in cultivation of mammalian cells.

### Preferred embodiments of the invention

The present invention is now explained more in detail in the following embodiments, with reference to the accompanying figures, wherein:

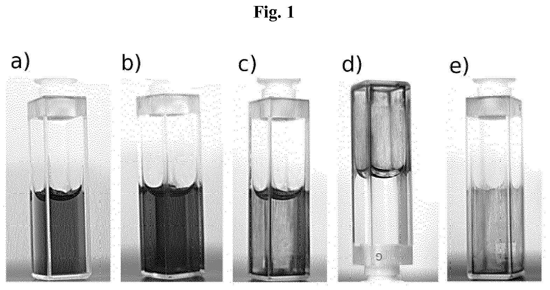

- Fig. 1: shows images illustrating the deposition process of nanocomposites on the walls of a glass cell (a - solution of nanoparticles in a glass cell, b - solution of nanoparticles in a glass cell after acidification with HCl; c - solution of nanoparticles after complete deposition of the nanocomposite on the cell walls, d- solution of nanoparticles after complete deposition of the nanocomposite on the cell walls (the cell is turned upside down to show that after adsorption the solution is colourless and clear), e - glass cell with nanocomposites deposited on its walls after drying in vacuum).
- Fig. 2: shows a SEM image of a network of nanoparticles deposited on a silicon surface after adding HCI (a - magnification 50,000 times, b - magnification 5,000 times);
- Fig. 3: shows SEM images of networks of nanoparticles deposited on a silicon surface after adding NaOH (a - magnification 50,000 times, b - magnification 5,000 times);
- Fig. 4: shows a SEM image of a network of nanoparticles deposited on a silicon surface after adding CuSO₄ (magnification 50,000 times);
- Fig. 5: shows images illustrating the coating of cotton with nanocomposites (a - cotton in solution of nanoparticles, b - cotton in solution of nanoparticles after acidification with HCl; c - supernatant, d - dry cotton);
- Fig. 6: shows a SEM image of a cotton (cosmetic cotton wool) modified with a nanocomposite in the presence of HCI (magnification 5,000 times);
- Fig. 7: shows an image of a cotton fabric (bandage) after modification with a nanocomposite in the presence of HCl;
- Fig. 8: shows a SEM image of a cotton fabric modified with a nanocomposite in the presence of HCI;
- Fig. 9: shows images of cotton samples after immersing in a liquid *E. Coli* culture (in the visible light, in UV, and after extracting the green colour only from the images in the UV light proving the presence of bacteria);
- Fig. 10: shows SEM images of cotton fibres (pure and modified) incubated in *E. Coli* solutions;
- Fig. 11: shows an image of dried cotton modified with gold nanocomposite in the presence of NaOH;
- Fig. 12: shows a SEM image of cotton modified with a nanocomposite in the presence of NaOH (magnification 5,000 times);
- Fig. 13: shows an image of cotton modified with a nanocomposite in the presence of CuSO₄ (magnification 5,000 times);
- Fig. 14: shows a SEM image of cotton modified with a nanocomposite in the presence of CuSO₄ (magnification 5,000 times);
- Fig. 15: shows an image of a glass fibre fabric modified with a nanocomposite in the presence of HCI;
- Fig. 16: shows a SEM image of a glass fibre fabric modified with a nanocomposite in the presence of HCI;
- Fig. 17: shows deposition of nanocomposites of gold nanoparticles und oxoborates on a fabric confirmed with the scanning electron microscopy (SEM);
- Fig. 18: shows an image of cotton modified with silver nanoparticles: a) cotton after adding a solution with silver nanoparticles, b)- cotton with silver nanoparticles after modification following acidification (HCI), c - purified and dried nanocomposite-modified cotton;
- Fig. 19: shows deposition of nanocomposites of silver nanoparticles and oxoborates on cotton fibres, confirmed with the scanning electron microscopy (SEM);
- Fig. 20: shows deposition of nanocomposites from a mixture of gold and silver nanoparticles on cotton, confirmed with the scanning electron microscopy (SEM);
- Fig. 21: shows deposition of nanocomposites, first of gold nanoparticles, and then of silver nanoparticles on a cosmetic cotton wool, confirmed with the scanning electron microscopy (SEM);
- Fig. 22: shows deposition of nanocomposites, first of silver nanoparticles, and then of gold nanoparticles on a cosmetic cotton wool, confirmed with the scanning electron microscopy (SEM);

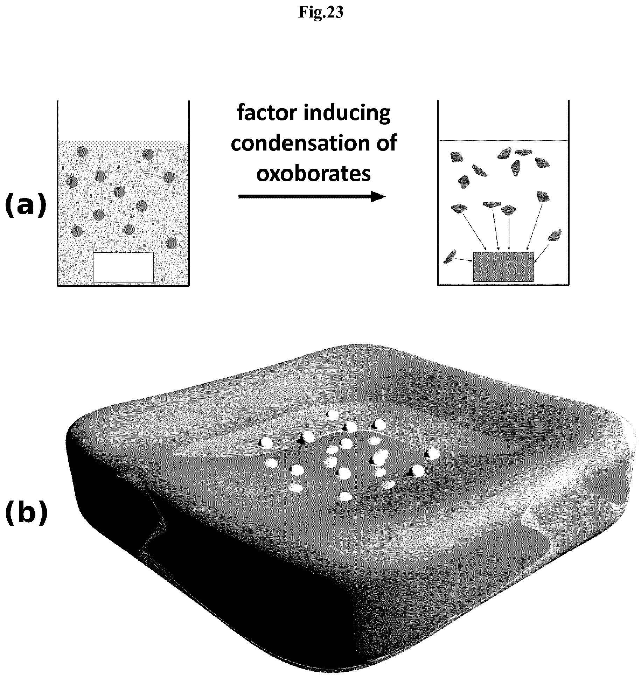

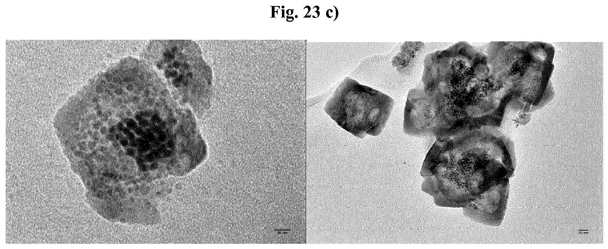

- Fig. 23: shows: (a) the scheme of procedure for the coating of surfaces with nanocomposite, (b) the scheme of a structure of a typical nanocomposite according to the present invention, i.e., a small block composed of oxoborates, containing nanoparticles; whereas such small blocks are used to coat the surface; the small block is approximately rectangular in shape with the edge length of a few tens of nanometres; the central part of the block is thinner than the peripheral one; nanoparticles are located in the central part; (c) microscopic images of the nanocomposite material according to the present invention;
- Fig. 24: shows images of bacterial inoculations described in Example IX;
- Fig. 25: shows a diagram illustrating bacterial survival rate as a function of time in contact with cotton modified according to the present invention, and in contact with a control sample (non-modified cotton); the experiment is described in Example IX;
- Fig. 26: shows microscopic images of typical cell cultures grown in the presence of the material according to the present invention (Example X): a) neurons, b) pancreatic islet cells, c) liver cells, d) stromal vascular fraction cells;
- Fig. 27: shows an image of Stöber sphere samples (made of SiO₂) after modification with a nanocomposite of gold and oxoborates at various pH (from the left: pH = 2, pH = 4 and pH = 6), according to Example XI;
- Fig. 28: shows SEM images of Stöber spheres (made of SiO₂) after modification with a nanocomposite of gold and oxoborates at various pH (from the left: pH = 2, pH = 4 and pH = 6) and after purification, and
- Fig. 29: shows an image of a spatula made of stainless steel after modification with a nanocomposite of gold and oxoborates in acidic medium, according to Example XII.

### Materials and equipment

High purity organic solvents supplied by Chempur were used in experiments. Other necessary, commercially available reagents were supplied by Sigma-Aldrich. The cotton used was in the form of a cosmetic and hygienic cotton wool (Toruńskie 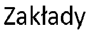 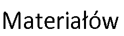 Opatrunkowych, Poland).

**Gold nanoparticles (AuNP) were obtained by the Martin method.** 50 µl of a 50 mM AuCl₄⁻ /HCI solution (solution of chlorauric(I) acid salt with equimolar addition of HCI) was added to 5 ml water. The aqueous AuCl₄/HCl solution was vortexed, and after a while 150 µl of freshly prepared 50 mM NaBH₄/NaOH solution (sodium borohydride solution with equimolar addition of NaOH) was injected into it. The whole was vortexed for another 1 min.

**Silver nanoparticles (AgNP) were obtained by the reduction of sodium nitrate with sodium borohydride.** 1 mM solution of silver nitrate was prepared. At the same time 2.27 mg NaBH₄ was weighted and dissolved in 30 ml water in a 50 ml flask. The NaBH₄ solution was stirred with a magnetic stirrer in an ice bath. 10 ml of AgNO₃ solution was taken with a syringe and slowly added dropwise (1 drop per 1 second) to the NaBH₄ solution. After the dropping was finished, the resulting AgNP solution was yellow. The silver nanoparticles were used directly after they had been synthesised (they were stored for no longer than 1 hour).

Submicrometric SiO₂ spheres were obtained with Stöber method. 11.35 ml ethanol and 0.65 ml tetraethoxysilane (TEOS) were placed in a 20 ml glass bottle. The content of the bottle was stirred with a magnetic stirrer. At the same time, diluted ammonia solution was prepared by mixing 2 ml of 25% ammonia water with 1 ml distilled water. The resulting ammonia solution was added to ethanol TEOS solution. As early as after a dozen minutes since the solutions had been mixed, a turbidity was noticed proving that the reaction was taking place. The whole was further stirred for 24 hours. After that period of time, the resulting suspension was frozen out in a vacuum line to strip ethanol and ammonia. The resulting microspheres (grains, spheres) were stored in an aqueous suspension of the same volume as the solution for the synthesis.

In tests, *Escherichia Coli* BL21 bacteria were used and transformed so as to provide them with a drug resistance to antibiotics chloramphenicol and kanamycin. In addition, a pET plasmid (calcium transformation) containing a gene coding green fluorescence protein (GFP) was introduced. The gene expression was regulated by the lac repressor, and therefore the GFP production was induced by adding isopropyl-beta-D-thiogalactopyranoside (IPTG). The culture media were prepared and all operations were performed under sterile conditions. All procedures related to bacteria growing were consistent with the standard protocols commonly used in microbiology.

An *E. Coli* colony from the solid medium was inoculated in 10 ml of LB medium with addition of chloramphenicol and kanamycin. The culture was placed in an incubator (37°C) for 24 h. After that time the bacteria were diluted with the LB medium to 300 ml. After 8 h, IPTG was added so that its concentration in the culture was about 1 mM. The culture was placed again in the incubator for 24 h. After that time, the OD₆₀₀ of the culture was about 1.8.

An S. *Epidermitis* colony was inoculated in 10 ml of LB medium without addition of antibiotics. The culture was placed in an incubator (37°C) for 24 h.

The experiment measuring the intensity of the GFP protein fluorescence under the UV-illumination proving the presence of bacteria on the surface of the tested material was carried out as follows: 10 ml samples of *E. Coli* culture with OD = 1.8 were sampled and placed in sterile test tubes. To each test tube identical masses of tested materials were added and the whole was placed in an incubator for 1 h. After that time, the samples of tested materials were transferred onto Petri dishes and after drying photographed in the UV light (254 nm).

The images were analysed using a Gimp 2.6 (GNU licence) and an ImageJ 1.46 (public domain licence) software. Two assumptions were made: 1) the results were normalised so that the highest intensity of the green fluorescence (the maximum number of bacteria) was assumed to represent 100%, 2) for a sample that was not immersed in the bacteria culture no GFP fluorescence was observed, i.e., it was assumed to represent 0%. As the cotton used in tests showed some photoactivity in the UV light, it was necessary to subtract the background in all images. The calibration was consistent with the assumption 2) - the background was subtracted from images of the samples.

The images of the samples were taken using a Canon 60D camera with a Carl Zeiss Jena 50 mm 1.8 Pancolar MC lens using an appropriate adapter. The exposure time and the aperture as well as the lighting conditions for taking pictures in the UV light were identical. A manual lamp emitting light with a maximum intensity at 254 nm was used as a source of the UV light.

The *E. Coli* (Gram-negative bacteria) and *S. Epidermidis* (Gram-positive bacteria) survival rates in the presence of the modified material as a function of time were examined with the colony count method. The bacterial suspension for that experiment was prepared as follows: The suspension of bacteria from the culture was diluted with LB to OD = 1. Then, the suspension of OD = 1 was further diluted with saline (0.9% NaCl solution) to reach the concentration of about 10⁴ cfu/ml. The bacterial suspension of such initial concentration was used for experiments testing antibacterial properties of the nanocomposites with the colony count method.

The images of surfaces of the samples were taken with a Zeiss (Ultra plus) scanning electron microscope (SEM) at the Institute of High Pressure Physics of the Polish Academy of Sciences. The microscope was equipped with a micro-analytical EDS system (Quantax 400, Bruker), with ultrafast detector (300,000 counts/second) with an energy resolution of 127 eV and an active area 30 mm². These parameters allowed for boron detection.

Metallic nanoparticles in the method disclosed here are obtained as a result of the reduction of a metal salt with borohydride (preferably sodium borohydride). IR studies on the obtained nanoparticles allowed for concluding that after synthesis the surface of nanoparticles is covered with water and boric acid molecules, whereas there is more boric acid than it would be required for covering the entire surface of nanoparticles with a monolayer. In boric acid solutions of a concentration higher than 0.025 M, the equilibrium is established between the non-ionised acid form B(OH)₃, and the polynuclear complexes B₃O₃(OH)₄⁻; B₄O₅(OH)₄²⁻; B₃O₃(OH)₅²⁻,B₅O₆(OH)₄⁻ and B(OH)₄⁻. The addition of H⁺ or OH⁻ ions may result in further condensation and formation of polyoxoanions. This is also the case for the present system, as confirmed by IR and Raman studies.

The condensation of oxoborates can be initiated not only by changing the pH, but also by adding various bivalent or trivalent metal salts. Metal ions originating from the metal salt can incorporate into the polyoxoborane structure during condensation (in that sense one can speak about doping the resulting nanocomposite with other metals).

The building material for the disclosed nanocomposite are metal nanoparticles (of one type or a mixture of different nanoparticles) embedded in a polyoxoborane matrix, whereas the surface of these nanoparticles is accessible (e.g., for reactions catalysed by gold nanoparticles), and so the matrix is porous or the nanoparticles are located on its surface. The performed TEM tests allow for concluding that in the first phase of the nanocomposite formation small objects (from a few to a few dozen, and even up to 100 nm) are formed and subsequently merge to form more complex structures (Fig. 23). These conclusions are confirmed also by the UV-Vis (aggregation in time) and the surface tension studies. In addition, it has been found that these objects are amphiphilic in nature and may accumulate at water:air interface (or organic solvent), where they form networks. The amphiliphilicity of these species is related to charge delocalisation and reduction of the formal charge of polymerised oxoborane anions (hydrophobic properties), and the presence of free OH⁻ groups (hydrophilic properties). Because of this property they can be successfully deposited both on hydrophilic (for instance by condensation with free OH groups) and hydrophobic surfaces (for instance due to hydrophobic interactions).

The method disclosed here can be used to modify both hydrophobic (in particular polymers, e.g., polystyrene, polystyrene dishes) and hydrophilic surfaces (e.g., glass, quartz, passivated silicon, silica, glass vessels, glass fibre, silicon plates, other nano- and microobjects made of silica), hydrophilic and amphiphilic polymers, natural and synthetic polymers, e.g., cellulose (cosmetic cotton wool, cotton fabric, including bandage) or metal surfaces (for instance stainless steel). For instance, the following objects have been modified: cotton bandage, glass cell, glass fibre, polystyrene Petri dish, stainless steel spatula, submicrometric silica objects (Stöber spheres).

### Example I

Modification of solid materials containing silica on their surfaces (in particular **glass, quartz).**

### • Modification of glass surfaces (glass cell)

2 ml colloidal solution of gold nanoparticles stabilised with oxoborane ligands was placed in a glass vessel. A magnetic stirrer was placed inside and the whole was stirred at room temperature at 500 rpm. 30.4 µl of 0.5 M HCI was added and a colour change from red to violet was observed (pH≈2). After about 1.5 hour it has been noticed that nanoparticles from the solution deposited on the cell walls (Fig. 1.). The nanoparticles were strongly bound to the substrate. Washing with solvents did not result in washing out of the nanoparticles. They could be removed only mechanically.

### • Modification of silicon surface

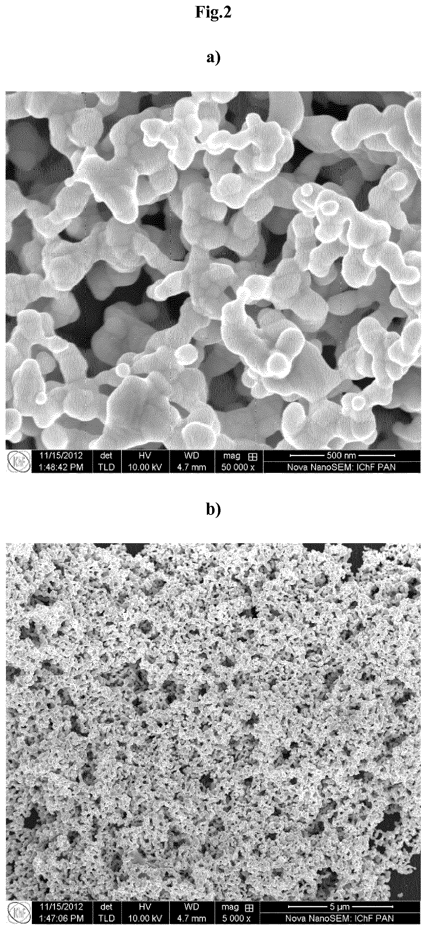

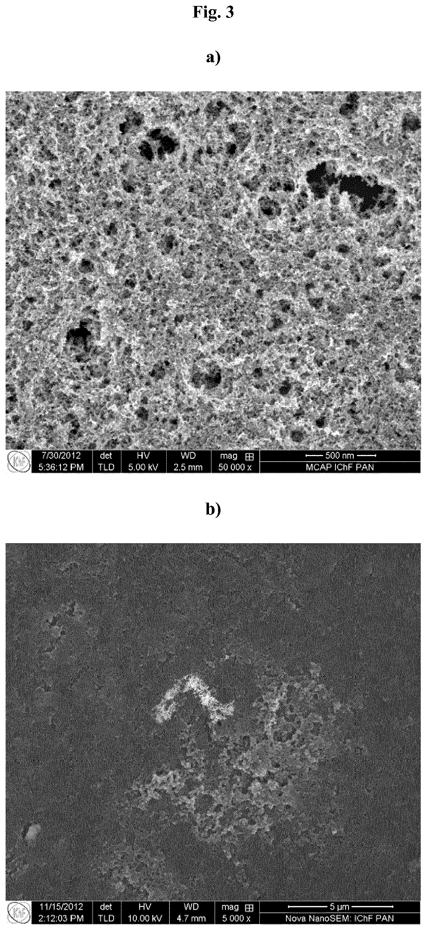

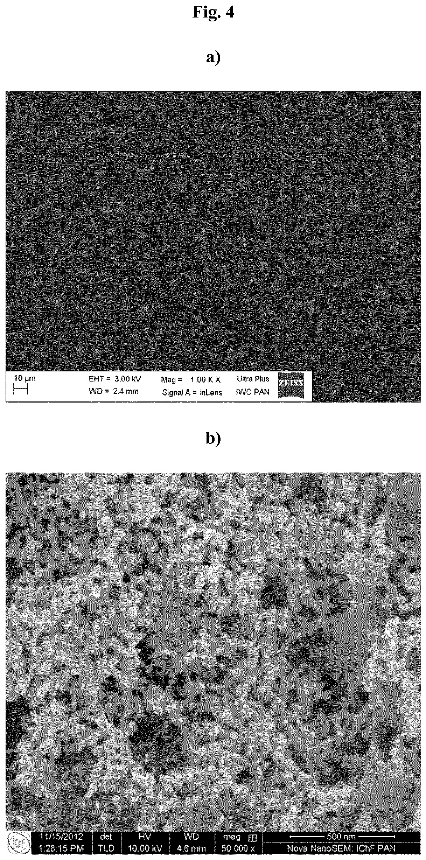

Silicon plates were placed on the bottoms of three glass vessels. 2 ml colloidal solution of gold nanoparticles stabilised with oxoborane ligands was added to each vessel. 30.4 µl of 0.5 M HCI was added to the first vessel, the same amount of 0.5 M NaOH was added to the second vessel, and the same amount of 0.5 M CuSO₄ was added to the third vessel. After the solution had completely decolourised, it was removed with a pipette, and the vessel with the plate was allowed to dry at room temperature. Dry plates were analysed with the SEM technique (Fig. 2 - 4).

Using the same method, silicon surface with hydrophobic properties (hydrophobically modified silicon in silanization with dodecyltriethoxysilane) was also modified. In all cases the substrate was coated with the composite material. The morphology of obtained structures varied depending on the method used.

### Example II

Production of cotton modified with the method according to the present invention and the use thereof as an antibacterial material - determination of the preferred pH in the modification procedure.

### 1. Modification of cotton

To a weighted amount of cosmetic cotton wool (0.036 g) 4 ml colloidal solution of gold nanoparticles was added. The samples were placed in a shaker set for operation at 400 rpm. Then, various amounts of 0.5 M HCI and various amounts of 0.5 M NaOH (minimum 3 µl, maximum 150 µl) were added to so prepared samples. The optimum pH values to be applied in the modification process were determined based on the observations of the rate and efficiency of adsorption of nanoparticles to the cotton wool.

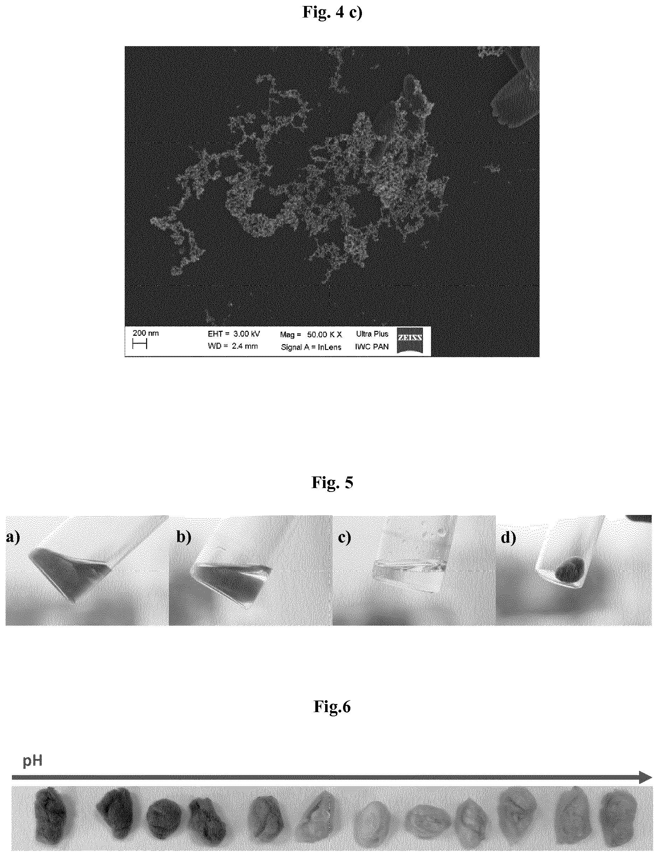

It was found that the modification took place in all solutions where HCI or NaOH was added (Fig. 5). Preferably, in samples acidified to a pH lower than 4, and most preferably - to a pH lower than or equal to 2 (addition of 60 µl of 0.5 M HCI). Then, the process is carried out without any loss of nanoparticles.

The volume of nanoparticles added to the cotton wool in the modification process may be greater than that in the example. The total adsorption of nanoparticles from a solution of pH=2 to 1 g of the cosmetic cotton wool could be reached for the maximum volume 167 ml of a 3.05·10⁻⁷ mol/l solution of nanoparticles.

### Example III

Production of cotton modified with the method according to the present invention and the use thereof as an antibacterial material.

### 1. Modification of cotton

To a weighted amount of cosmetic cotton wool (0.036 g) 4 ml colloidal solution of gold nanoparticles was added. The whole was placed in a shaker set for operation at 400 rpm. During the shaking procedure, 60.8 µl of 0.5 M HCI solution was added. A change in colour of the colloidal solution from red to violet was observed, proving the formation of nanocomposites. Within 20 minutes all the nanocomposites produced adsorbed to cotton, which could have been observed with a naked eye. The cotton became violet while the supernatant became entirely colourless.

### 2. Purification of the obtained material

The material obtained was purified by repeated (minimum 3 times) centrifugation (5 min, 5000 rpm), decantation of the solution from above the modified material and replacement of the supernatant with pure deionised water (10 ml).

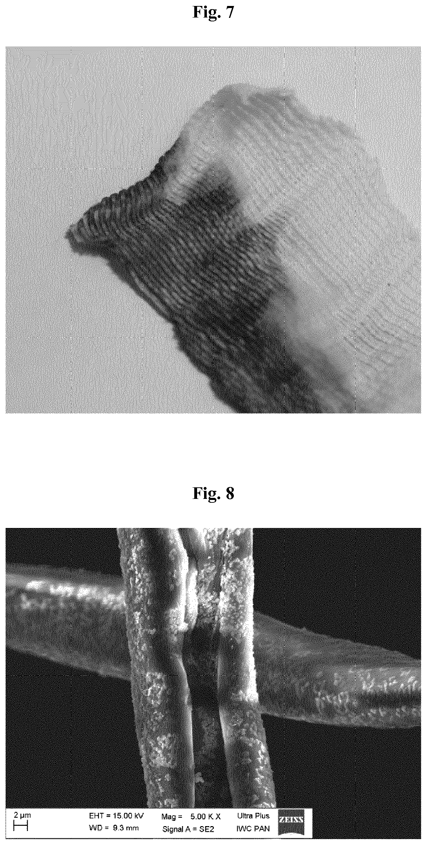

A modified cotton in a violet colour was obtained (Fig. 6: a - cotton in solution of nanoparticles, b - cotton in solution of nanoparticles after acidification with HCl; c-supernatant, d - dry cotton). The deposition of nanocomposites of gold nanoparticles and oxoborates on cotton fibres was confirmed with the scanning electron microscopy (SEM) (Fig. 7).

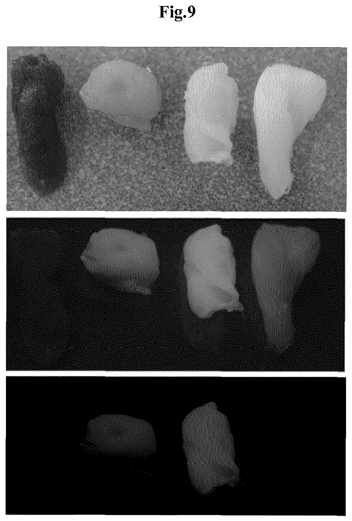

A cotton fabric (bandage) has been modified using the same procedure (Fig. 8 and 9).

### 3. Antibacterial properties

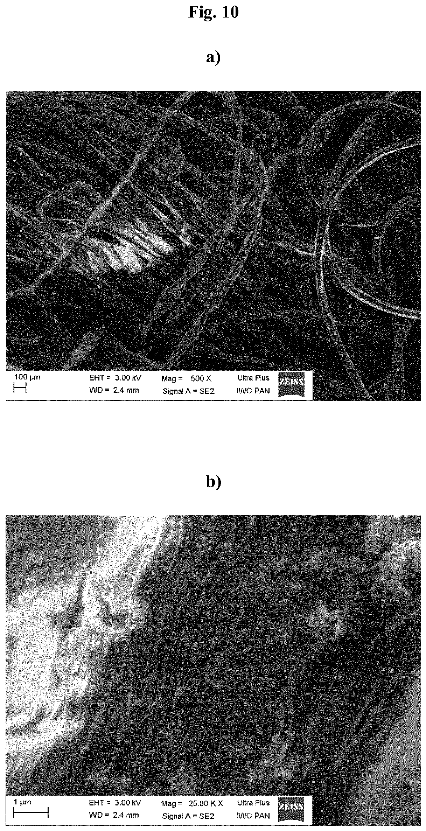

The analysis of the GFP fluorescence intensity (Fig. 10) has shown that much less bacteria have deposited on the composite material than on the non-modified cotton wool. It has been shown that this effect did neither result from the acidification, nor the presence of borates or NaOH. The results obtained are summarised in the table below.

The results obtained are summarised in **Table 1** (the data shown in the Table are normalised to a non-modified cotton wool sample - that was immersed in water rather than in solution of nanoparticles, that's why the sample identification is: water). Designations c, c/4 and c/40 relate to the concentration of nanoparticles used in the modification process, and so to the amount of the nanocomposite adsorbed on the cellulose fibres.

**Table 1. Comparison of fluorescence intensity for samples of modified cotton wool (AuNP with HCI addition) after they were immersed in an E. Coli culture for 1 hour and the reference samples.**

| sample identification | fluorescence intensity [%] |
|---|---|
| water | 100 |
| boric acid and pH2 | 98 |
| pH2 c | 0 |
| pH2 c/4 | 0 |
| pH2 c/40 | 46 |

| | |
|---|---|
| c- concentration of nanoparticles = 3.05·10⁻⁷ mol/l c/4 - solution of nanoparticles diluted 4x c/40 - solution of nanoparticles diluted 40x | |

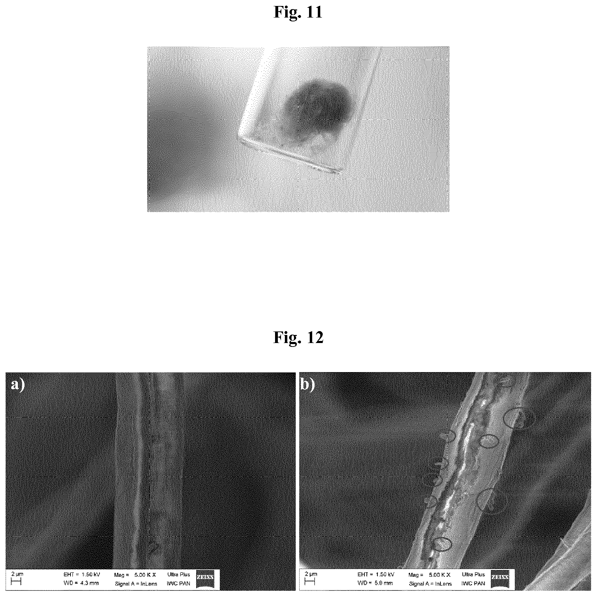

Fig. 11 shows SEM images proving that the amount of bacteria on the modified cotton wool (Fig. 11a) is much less than that on the starting material (Fig. 11b). The bacteria are well noticeable at the edges of the observed fibres.

### Example IV

Production of cotton modified with the method according to the present invention and the use thereof as an antibacterial material.

### 1. Modification of cotton

To a weighted amount of cosmetic cotton wool (0.036 g) 4 ml colloidal solution of gold nanoparticles was added. The whole was placed in a shaker set for operation at 400 rpm. During the shaking procedure, 60.8 µl of 0.5 M NaOH solution was added. A change in colour of the colloidal solution from red to navy blue was observed, proving the formation of nanocomposites (pH10 c). Within 20 minutes all the nanocomposites produced adsorbed to cotton, which could have been observed with a naked eye. The cotton became navy blue. The same procedure was used for the sample "pH10 c/4", whereas the concentration of nanoparticles in sample 1 was 4 times greater than in sample 2.

### 2. Purification of the obtained material

The material obtained was purified by repeated (minimum 3 times) centrifugation (5 min, 5000 rpm), decantation of the solution from above the modified material and replacement of the supernatant with pure deionised water (10 ml).

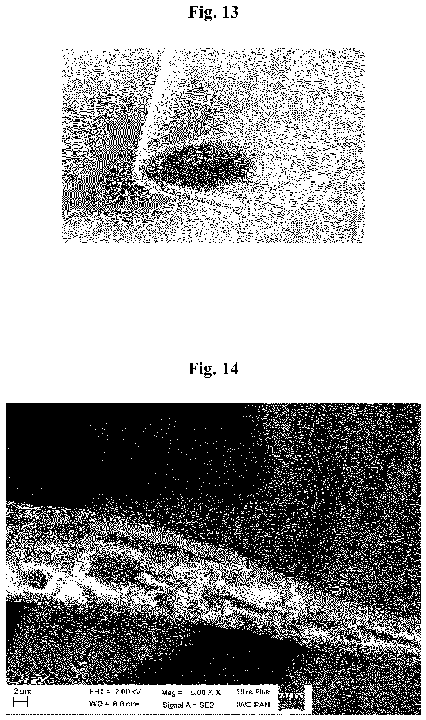

A modified cotton in a navy blue colour was obtained (Fig. 12). The deposition of nanocomposites of gold nanoparticles and oxoborates on cotton fibres was confirmed with the scanning electron microscopy (SEM) (Fig. 13).

### 3. Antibacterial properties

The analysis of the GFP fluorescence intensity has shown that much less bacteria have deposited on the composite material than on the non-modified cotton wool. It has been shown that the antiseptic properties of the obtained material are strictly dependent on the amount of adsorbed nanocomposite.

The results obtained are summarised in **Table 2** (the data shown in the Table are normalised to a non-modified cotton wool sample - that was immersed in water rather than in the solution of nanoparticles, that's why the sample identification is: water). Designations c, c/4 relate to the concentration of nanoparticles used in the modification process, and so to the amount of nanocomposite adsorbed on the cellulose fibres.

**Table 2. Comparison of fluorescence intensity for samples of modified cotton wool (AuNP with NaOH addition) after they were immersed in an E. Coli culture for 1 hour and the reference samples.**

| sample identification | fluorescence intensity [%] |
|---|---|
| water | 100 |
| NaOH and pH 10 | 91 |
| pH10 c | 0 |
| pH10 c/4 | 106 |

| | |
|---|---|
| c- concentration of nanoparticles = 3.05·10⁻⁷ mol/l c/4 - solution of nanoparticles diluted 4x | |

Summarising the results from example II, III and IV it has been concluded that the modification is preferably carried out in an acidic medium (and exactly at the pH lower than 2). Most preferably at pH = 2. Both the cotton wool modified in a basic medium and the cotton wool modified in an acidic medium show better antibacterial properties than the cotton wool immersed in a solution containing nothing but nanoparticles. In the last case the fluorescence observed was reduced by only 44%.

### Example V

Production of cotton modified with the method according to the present invention and the use thereof as an antibacterial material.

### 1. Modification of cotton

To a weighted amount of cosmetic cotton wool (0.036 g) 4 ml colloidal solution of gold nanoparticles was added. The whole was placed in a shaker set for operation at 400 rpm. During the shaking procedure, 60.8 µl of 0.5 M CuSO₄ salt solution was added. A change in colour of the colloidal solution from red to navy blue was observed, proving the formation of nanocomposites. Within 20 minutes all the nanocomposites produced adsorbed to cotton, which could have been observed with a naked eye. The cotton became navy blue while the supernatant became entirely colourless.

### 2. Purification of the obtained material

The material obtained was purified by repeated (minimum 3 times) centrifugation (5 min, 5000 rpm), decantation of the solution from above the modified material and replacement of the supernatant with pure deionised water (10 ml).

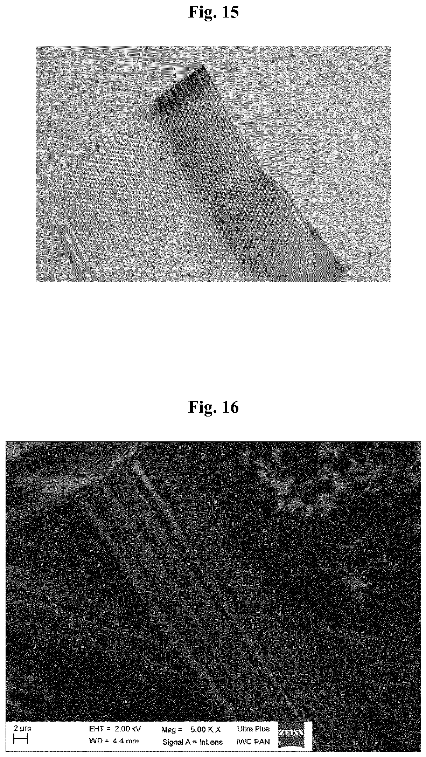

A modified cotton in a navy blue colour was obtained (Fig. 14). The deposition of nanocomposites of gold nanoparticles and oxoborates on cotton fibres was confirmed with the scanning electron microscopy (SEM) (Fig. 15).

The same method was used to prepare cotton samples modified with gold nanoparticles stabilised with oxoborane ligand after addition of other salts: CaCl₂, FeCl₃ (in amounts equimolar to CuSO₄). 3. Antibacterial properties.

The analysis of the GFP fluorescence intensity has shown that much less bacteria have deposited on the composite material than on the non-modified cotton wool. It has been shown that the antiseptic properties of the obtained material are dependent on the amount of adsorbed nanocomposite. The normalised data bare shown in Table 3.

**Table 3. Comparison of fluorescence intensity in samples of modified cotton wool (AuNP with addition of salts CuSO₄, CaCl₂, and FeCl₃) after they were immersed in an E. Coli culture for 1 hour and the reference samples.**

| sample identification | fluorescence intensity [%] |
|---|---|
| water | 100 |
| Fe | 16 |
| Fe c | 0 |
| Fe c/4 | 0 |
| Fe c/40 | 0 |
| Cu | 52 |
| Cu c | 0 |
| Cu c/4 | 0 |
| Cu C/40 | 32 |
| Ca | 82 |
| Ca c | 0 |
| Ca c/4 | 0 |
| Ca c/40 | 56 |

| | |
|---|---|
| c- concentration of nanoparticles = 3,05·10⁻⁷ mol/l c/4 - solution of nanoparticles diluted 4x c/40 - solution of nanoparticles diluted 40x Fe, Cu, Ca - solutions containing only salts FeCl₃, CuSO₄, CaCl₂ | |

Similarly as for modifications at different pH, also in this case the results were normalised to those for the cotton wool sample in water. In all samples, where the concentration of nanoparticles was maximal, the fluorescence was totally reduced - proving the absence of bacteria. The effect of metal ions only was excluded, although for iron salt the effect of the salt alone was significant (reduction of the fluorescence down to 16% as compared with the reference).

The best results were obtained for cotton modification using Fe salts - the total reduction of fluorescence even if the concentration of nanoparticles was 40x less that the maximal one.

Summarising the methods for cotton modification and its use as an antibacterial material, as shown in aforementioned examples, the best results could be obtained with modification using FeCl₃ salts, then with CuSO₄, with HCI addition (pH2), CaCl₂, whereas the least advantageous results were obtained for the NaOH solution (pH10).

### Example VI

Production of glass fibre fabric modified with the method according to the present invention.

### 1. Modification of a glass fibre fabric

A 5.5 x 5.0 cm piece of glass fibre fabric was rolled up in a roll and placed in a glass bottle, to which 4 ml of colloidal solution of gold nanoparticles was added. The whole was placed in a shaker set for operation at 400 rpm. During the shaking procedure, 60.8 µl of 0.5 M HCI solution was added. A change in colour of the colloidal solution from red to violet was observed, proving the formation of nanocomposites. Within 20 minutes all the nanocomposites produced adsorbed to the fabric, which could have been observed with a naked eye. The fabric became violet while the supernatant became entirely colourless.

### 2. Purification of the obtained material

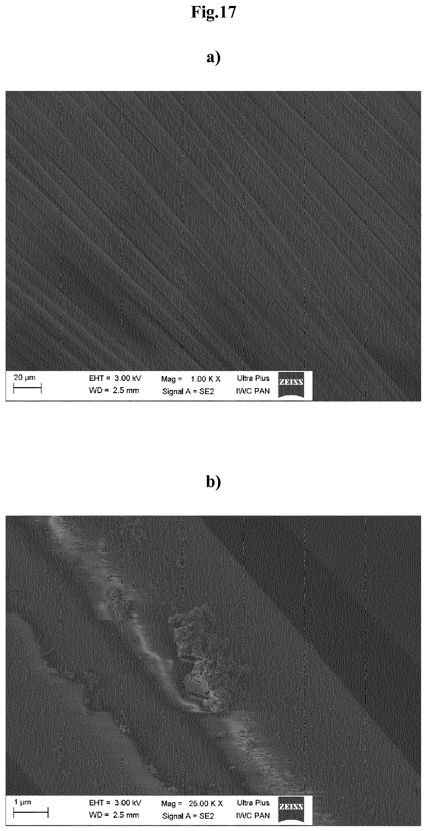

The material obtained was purified by repeated (minimum 3 times) shaking of the modified material with deionised water (portions 10 ml each) and decantation of the supernatant. A modified glass fibre fabric in violet colour was obtained (Fig. 16). The deposition of nanocomposites of gold nanoparticles and oxoborates on the fabric was confirmed with the scanning electron microscopy (SEM) (Fig. 17).

### Example VII

Production of cotton modified with the method according to the present invention.

### 1. Modification of cotton

To a weighted amount of cosmetic cotton wool (0.12 g) 40 ml colloidal solution of silver nanoparticles was added. The whole was placed in a shaker set for operation at 400 rpm. During the shaking procedure, 600 µl of 0.5 M HCI solution was added. A change in colour of the colloidal solution from yellow to yellow-green was observed, proving the formation of nanocomposites. Within 20 minutes all the nanocomposites produced adsorbed to cotton, which could have been observed with a naked eye. The cotton became green-grey while the supernatant became entirely colourless.

### 2. Purification of the obtained material

The material obtained was purified by repeated (minimum 3 times) centrifugation (5 min, 5000 rpm) and decantation of the solution from above the modified material, and replacement of the supernatant with pure deionised water (10 ml).

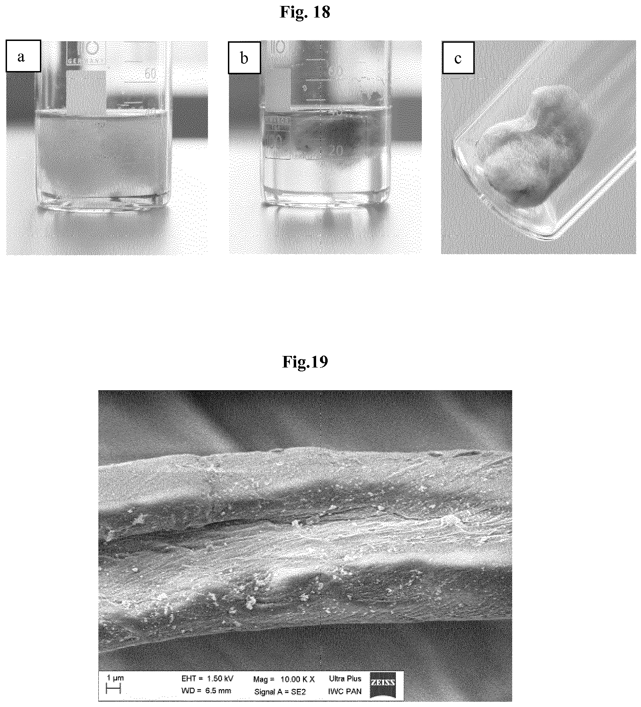

A modified cotton in a green-grey colour was obtained (Fig. 18. a - cotton in solution of silver nanoparticles, b - cotton in solution of nanoparticles after acidification with HCl; c- dry cotton modified with silver nanoparticles). The deposition of nanocomposites of silver nanoparticles and oxoborates on cotton fibres was confirmed with the scanning electron microscopy (SEM) (Fig. 19).

### Example VIII

Production of cotton modified with the method according to the present invention - modification with gold and silver nanoparticles.

### a) In a mixture of gold and silver nanoparticles

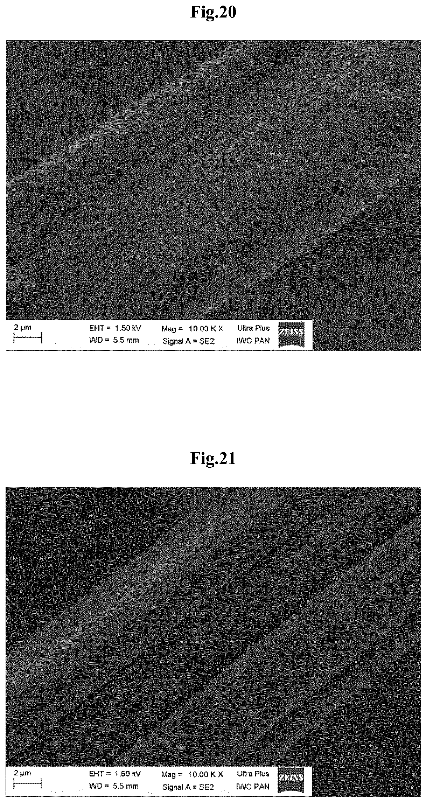

To a weighted amount of cosmetic cotton wool (0.036 g) 2 ml colloidal solution of gold nanoparticles and 4 ml colloidal solution of silver nanoparticles were added. The whole was placed in a shaker set for operation at 400 rpm. During the shaking procedure, 60.8 µl of 0.5 M HCI solution was added. A change in colour of the colloidal solution from red-orange to violet was observed, proving the formation of nanocomposites. Within 20 minutes all the nanocomposites produced adsorbed to cotton, which could have been observed with a naked eye. The cotton became violet while the supernatant became entirely colourless (Fig. 20).

### b) Stepwise - first gold nanoparticles, and subsequently silver nanoparticles

To a weighted amount of cosmetic cotton wool (0.036 g) 2 ml colloidal solution of gold nanoparticles was added. The whole was placed in a shaker set for operation at 400 rpm. During the shaking procedure, 30 µl of 0.5 M HCI solution was added. A change in colour of the colloidal solution from red to violet was observed, proving the formation of nanocomposites. Within 20 minutes all the nanocomposites produced adsorbed to cotton, which could have been observed with a naked eye. The cotton became violet while the supernatant became entirely colourless. After adsorption, the cotton wool has been washed with distilled water and 4 ml colloidal solution of silver nanoparticles was added to it. Then, it was placed in a shaker and 60 µl of 0.5 M HCI solution was added. Within 20 minutes all the nanocomposites produced adsorbed to cotton, which could have been observed with a naked eye. The cotton became grey-violet while the supernatant became entirely colourless.

The nanocomposite resulting from this procedure was purified as earlier (Fig. 21).

### c) Stepwise - first silver nanoparticles, and subsequently gold nanoparticles

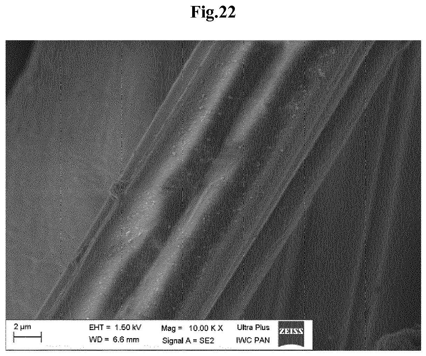

The operations described in section b) have been repeated in reversed sequence. First, cotton has been modified with a nanocomposite made of silver nanoparticles, purified, and subsequently modified with a nanocomposite made of gold nanoparticles. (Fig.22)

### Example IX

Production of cotton modified with the method according to the present invention and the use thereof as an antibacterial material with respect to Gram-negative and Gram-positive bacteria.

The materials modified with the method disclosed here have bactericidal properties. The tests were carried out using cellulose (= cosmetic cotton wool) modified with nanocomposites made of gold nanoparticles and oxoborates in an acidic medium. The bacterial survival rate in the presence of modified material was studied with the colony counting method.

### 1. Modification of cotton

To a weighted amount of cosmetic cotton wool (0.015 g) 2.5 ml colloidal solution of gold nanoparticles was added. The whole was placed in a shaker set for operation at 400 rpm. During the shaking procedure, 38 µl of 0.5 M HCI solution was added. A change in colour of the colloidal solution from red to violet was observed, proving the formation of nanocomposites. Within 20 minutes all the nanocomposites produced adsorbed to cotton, which could have been observed with a naked eye. The cotton became violet while the supernatant became entirely colourless.

### 2. Purification of the obtained material

The material obtained was purified by repeated (minimum 3 times) centrifugation (5 min, 5000 rpm) and decantation of the solution from above the modified material, and replacement of the supernatant with pure deionised water (10 ml).

### 3. Antibacterial properties

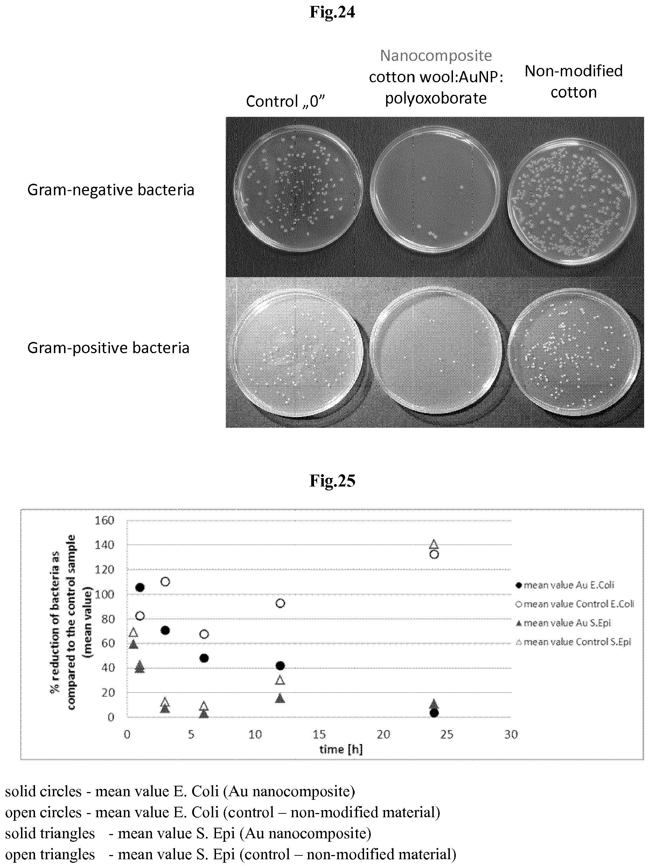

To a modified cotton wool and a control sample, 0.015 g each, 1 ml bacterial suspension of a concentration of about 10⁴ cfu/ml was added. The whole was vortexed (shaken) for about 30 s and 1 portion of 50 µl suspension from above the tested materials was sampled for inoculation on Petri dishes with agar. The samples were placed in a shaker at room temperature and subsequent suspension portions for inoculation were sampled after 1, 3, 6, 12, and 24 hours. After transferring on a dish with agar, each portion of suspension was spread with a plastic glass spreader (hockey stick). Immediately after inoculation, the dishes with bacteria were placed in an incubator (37°C, 5% CO₂) for 24 h. After that time, the dishes were transferred to a refrigerator, and photographed after all samples were collected (typical images of samples inoculated after 24 hours since the experiment was started are shown in Fig. 24). The images were the basis for subsequent calculation of the colony count in each dish.

In order to compare the bacterial survival rates, the % reduction of bacteria in a tested sample was calculated and compared with the control sample (bacterial suspension where nothing was added). These values were used to calculate the mean (for *E. Coli* the mean from 4 measurements, for *S. Epi* the mean from 2 measurements). The result is shown in the diagram (Fig. 25).

### Example X

The materials modified with the method disclosed here are not toxic to mammalian cells.

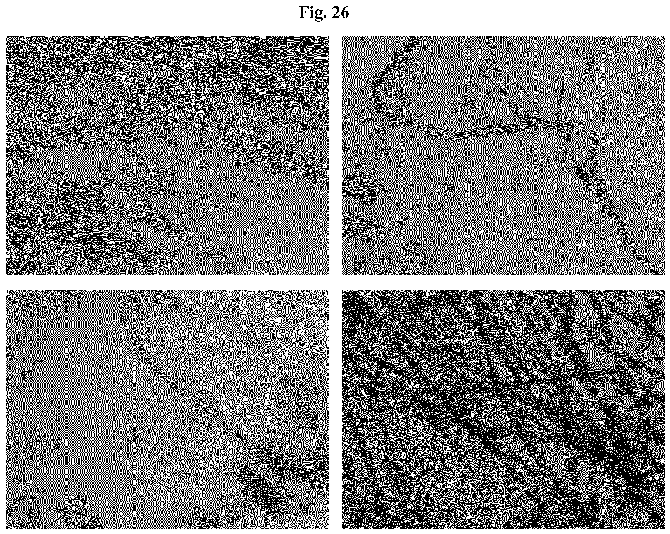

Toxicity tests on the material modified according to the method disclosed here have shown that mammalian cells can grow on it in spite of the material being antibacterial. The cells were grown in a liquid medium, where the modified material (cotton wool with deposited AuNP:polyoxoborate nanocomposite) was immersed. In the presence, and also on the surface of the material modified with the method disclosed here, whereas importantly the said material was not subject to any prior disinfection procedures, human cells of different types could grow even 4 weeks after inoculation. The cultivated cells were observed under a fluorescence microscope. Typical images of cell cultures grown in the presence of the material modified with the method disclosed here are shown in pictures (Fig. 26; a - neurons (LN18), b - pancreatic islet cells (BTC6), c - liver cells (HepG2), d - stromal vascular fraction cells (SVF)).

### Example XI

### Production of modified submicrometric silica spheres with the method according to the invention (in an acidic medium)

### 1. Modification of SiO₂ spheres produced in Stöber synthesis

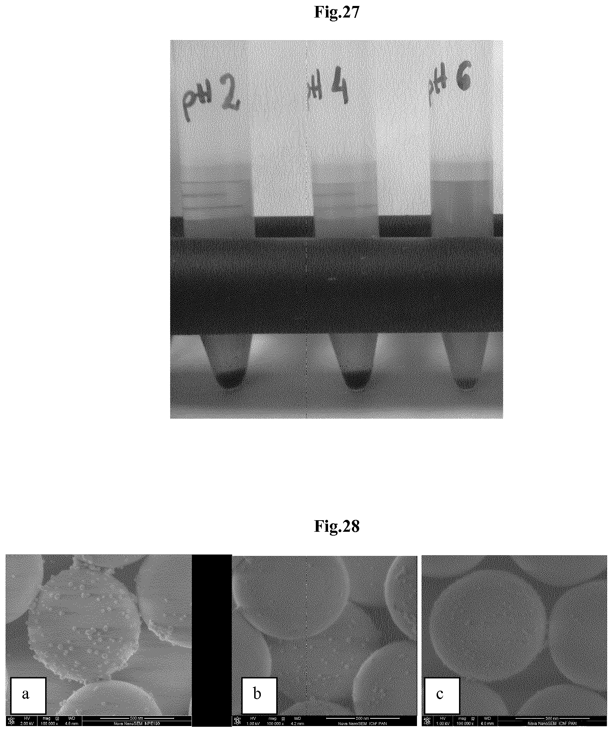

To SiO₂ spheres (grains, microspheres) obtained with Stöber method, suspended in 5ml H₂O, a 1M HCI solution was added to produce an appropriate pH (the pH was checked with litmus paper). Suspensions of SiO₂ spheres of pH = 2, and pH = 4, and pH = 6 were obtained.* The samples were sonicated for 10 min, then the vials were placed in a shaker (400 rpm) and 2 ml of gold nanoparticles was added to each vial. After a dozen or so minutes, precipitation of a homogenous red-violet precipitate was observed (Fig. 27), but the samples were left in the shaker for 24 hours. After that time the precipitate was purified by repeated (3 times). centrifugation (5 min, 5000 rpm), decantation of the solution from above the modified material, and replacement of the supernatant with pure deionised water (10 ml).

Samples of the obtained modified materials were analysed with the scanning electron microscopy (SEM) (Fig. 28, a- SiO₂ spheres modified with gold nanoparticles at pH=2; b -SiO₂ spheres modified with gold nanoparticles at pH = 4, c - SiO₂ spheres modified with gold nanoparticles at pH = 6). The samples differed in size of the gold nanocomposites and oxoborates attached to the silica surface. At pH = 2 the average size of these objects was 30 nm, whereas at pH = 4 their average size was = 14nm, and at pH = 6 the attached aggregates were 9 nm in size.

*) At pH = 7 the Au nanoparticles are stable and do not adsorb at the silica surface, at pH above 7 the nanoparticles aggregate and do not adsorb to silica - the resulting product is inhomogeneous. Besides, at a basic pH the silica is subject to degradation.

### Example XII

Production of modified metal (stainless steel) spatula according to the present invention (modification in an acidic medium).

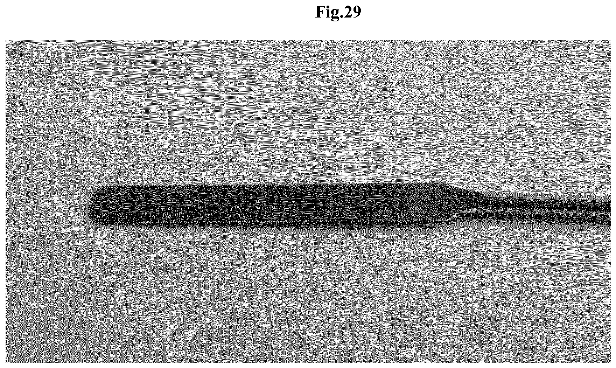

A stainless steel spatula was placed in a plastic centrifuge vial, and subsequently 2.5 ml gold nanoparticles solution prepared with Martin method was added. For a longer while (about 30 min) no changes were absorbed. Then, 37 µl 0.5 M HCI was added to the system and after a few minutes the solution changed its colour to violet, and nanocomposite adsorption to spatula surface was observed. The deposition of the nanocomposite was confirmed by the colour change of the metal surface of the spatula (Fig. 29).

### Acknowledgement

Katarzyna Wybrańska is a scholarship holder in the TEAM program of the Foundation for Polish Science, co-financed from the European Union funds - the European Regional Development Fund. Project topic: "Self-assembled two- and three-dimensional nanocomposites" **(TEAM/2010-6/4/styp6).**

Jan Paczesny is a scholarship holder under the Sub-activity 8.2.2 "Regional Innovation Strategies", Activity 8.2 "Transfer of Knowledge", Priority VIII "Regional Human Resources for the Economy" of the Human Capital Operational Programme, co-financed by the EU European Social Funds and the state budget **(DFS.VI.3361-4-37-033/10).**

The fees related to the protection of the invention were financed by the project NanOtechnology, Biomaterials and aLternative Energy Source for ERA integration FP7-REGPOT-CT-2011-285949-NOBLESSE.

## Claims

1. A method for surface modification with nanocomposites containing metallic nanoparticles and boron compounds, **characterised in that** the selected solid substance comprising the surface to be modified is placed in a colloidal solution of bare metallic nanoparticles stabilised with boron compounds being oxoborates, and subsequently the oxoborates are polymerised/condensed by induction of a pH change by adding an acid or a base, or by addition of bivalent or trivalent metal salts, in particular Mg, Ca, Cu, Fe, Cr, Au, Hg, or Pb salts, which results in formation of nanocomposites from metallic nanoparticles and polyoxoborates adsorbed on the material used.

2. The method according to claim 1, **characterised in that** the metallic nanoparticles are used that were obtained by reduction of respective metal salt with borohydride, preferably sodium borohydride.

3. The method according to claim 1 or 2, **characterised in that** as the acid, organic or inorganic acids are used, preferably HCI, and as the base, organic and inorganic bases are used, preferably NaOH.

4. The method according to one of the claims 1 to 3, **characterised in that** as the bivalent metal salt, CuSO₄ or CaCl₂ are used, and as the trivalent metal salt FeCl₃ is used.

5. The method according to one of the claims 1 to 4, **characterised in that** the amount of nanoparticles in nanocomposites deposited on the surface being modified is controlled by changing the volume of colloidal solution of nanoparticles that is added during the modification process.

6. The method according to one of the claims 1 to 5, **characterised in that** the size of nanocomposites deposited on the surface being modified is controlled in the modification process either by changing the pH in the range from above 0 to 10, preferably from above 0 to 4, and most preferably below 2, or by changing concentration of the colloidal solution of nanoparticles.

7. The method according to one of the claims 1 to 6, **characterised in that** the process is carried out at temperature ranging from 0°C to 100°C, preferably at room temperature.

8. A nanocomposite material obtained by the method according to any of the claims 1 to 7, **characterised in that** it comprises metal nanoparticles embedded in a polyoxoborate matrix, whereas the surface of at least some of these nanoparticles is exposed.

9. The material according to claim 8, **characterised in that** the metal nanoparticles comprise nanoparticles of one or more of the following metals: gold, silver, copper, nickel, cobalt, platinum, and preferably gold or silver.

10. The material according to claim 8 or 9, **characterised in that** the material additionally comprises atoms of one or more bi- or trivalent metals, and in particular atoms of one of the following metals: Mg, Ca, Cu, Fe, Cr, Au, Hg, Pb.

11. The material according to any of the claims 8 to 10, in the form of a layer deposited on a substrate, in particular on the substrate selected from the group comprising: passivated silicon, silica, quartz, glass, metal, stainless steel, glass wool, glass fibre, paper, cosmetic cotton wool, cotton fabric, natural polymers, in particular cellulose, carrageenan, pectin and chitosan, synthetic polymers, in particular polystyrene, poly-HEMA.

12. The material according to claim 11, **characterised in that** the substrate coverage by the said layer is less than 100%, which means that at least a part of the substrate is uncovered.

13. Use of the nanocomposite material according to any of the claims 8 to 12 in fabrication of antiseptic surfaces or surfaces for use in cultivation of mammalian cells.

## Patentansprüche

1. Verfahren zur Oberflächenmodifizierung mit Nanokompositen, die metallische Nanopartikel und Borverbindungen enthalten, **dadurch gekennzeichnet, dass** der ausgewählte Feststoff, der die zu modifizierende Oberfläche enthält, in eine kolloidale Lösung aus blanken metallischen Nanopartikeln stabilisiert mit Borverbindungen, welche Oxoborate sind, eingebracht wird und anschließend werden die Oxoborate polymerisiert/kondensiert induziert durch eine Änderung des pH-Wertes durch Zugabe einer Säure oder einer Base oder durch Zugabe von zweiwertigen oder dreiwertigen Metallsalzen, insbesondere Mg-, Ca, Cu-, Fe-, Cr-, Au-, Hg- oder Pb-Salzen, was in der Bildung von Nanokompositen aus metallischen Nanopartikeln und Polyoxoboraten resultiert, die an dem verwendeten Material adsorbiert sind.

2. Verfahren gemäß Anspruch 1, **dadurch gekennzeichnet, dass** die metallischen Nanopartikel verwendet werden, die durch Reduktion der jeweiligen Metallsalze mit Borhydrid, vorzugsweise Natriumborhydrid erhalten werden.

3. Verfahren gemäß Anspruch 1 oder 2, **dadurch gekennzeichnet, dass** als die Säure, organische oder anorganische Säuren, vorzugsweise HCl, verwendet werden und als die Base, organische und anorganische Basen, vorzugsweise NaOH, verwendet werden.

4. Verfahren gemäß einem der Ansprüche 1 bis 3, **dadurch gekennzeichnet, dass** als das zweiwertige Metallsalz CuSO₄ oder CaCl₂ verwendet wird und als dreiwertiges Metallsalz FeCl₃ verwendet wird.

5. Verfahren gemäß einem der Ansprüche 1 bis 4, **dadurch gekennzeichnet, dass** die Menge von Nanopartikeln in Nanokompositen, die auf der Oberfläche, die modifiziert wird, abgeschieden werden, durch Veränderung des Volumens der kolloidalen Lösung von Nanopartikeln, die während des Modifizierungsprozesses hinzugefügt werden, kontrolliert wird.

6. Verfahren gemäß einem der Ansprüche 1 bis 5, **dadurch gekennzeichnet, dass** die Größe der Nanokompositen die auf der Oberfläche, die modifiziert wird, abgeschieden werden, im Modifizierungsprozess entweder durch Änderung des pH-Werts im Bereich von über 0 bis 10, vorzugsweise von über 0 bis 4 und am meisten bevorzugt unter 2, oder durch Änderung der Konzentration der kolloidalen Lösung der Nanopartikel kontrolliert wird.

7. Verfahren gemäß einem der Ansprüche 1 bis 6, **dadurch gekennzeichnet, dass** der Prozess bei einer Temperatur in einem Bereich von 0°C bis 100°C, vorzugsweise bei Zimmertemperatur, ausgeführt wird.

8. Nanokompositmaterial, welches durch ein Verfahren gemäß einem der Ansprüche 1 bis 7 erhalten wird, **dadurch gekennzeichnet, dass** es Metallnanopartikel umfasst, die in einer Polyoxoboratmatrix eingebettet sind, während die Oberfläche mindestens einiger dieser Nanopartikel freigelegt ist.

9. Material gemäß Anspruch 8, **dadurch gekennzeichnet, dass** die Metallnanopartikel Nanopartikel aus einem oder mehreren der folgenden Metalle umfassen: Gold, Silber, Kupfer, Nickel, Kobalt, Platin und bevorzugt Gold oder Silber.

10. Material gemäß Anspruch 8 oder 9, **dadurch gekennzeichnet, dass** das Material zusätzlich Atome aus einem oder mehreren zwei- oder dreiwertigen Metallen enthält, insbesondere Atome eines der folgenden Metalle: Mg, Ca, Cu, Fe, Cr, Au, Hg, Pb.

11. Material gemäß einem der Ansprüche 8 bis 10, in Form einer Schicht, die auf einem Substrat abgeschieden ist, insbesondere auf einem Substrat ausgewählt aus der Gruppe enthaltend: passiviertes Silizium, Kieselsäure, Quarz, Glas, Metall, Edelstahl, Glaswolle, Glasfaser, Papier, kosmetische Watte, Baumwollstoff, natürliche Polymere, insbesondere Zellulose, Carrageen, Pektin und Chitosan, synthetische Polymere, insbesondere Polystrole, Poly-HEMA.

12. Material gemäß Anspruch 11, **dadurch gekennzeichnet, dass** die Substratabdeckung der vorstehend genannten Schicht weniger als 100% beträgt, was bedeutet, dass zumindest ein Teil des Substrates unbedeckt ist.

13. Verwendung des Nanokompositmaterials gemäß einem der Ansprüche 8 bis 12 bei der Herstellung von antiseptischen Oberflächen oder von Oberflächen zur Verwendung bei der Kultivierung von Säugerzellen.

## Revendications

1. Un procédé de modification de surface avec des nano-composites contenant des nanoparticules métalliques et des composés de bore, **caractérisé en ce que** la substance solide choisie comprenant la surface à modifier est placée dans une solution colloïdale de nanoparticules métalliques nues stabilisées par des composés de bore qui sont des oxoborates, et les oxoborates sont ensuite polymérisés/condensés par induction d'un changement de pH par addition d'un acide ou d'une base, ou par addition de sels métalliques bivalents ou trivalents, en particulier de sels de Mg, Ca, Cu, Fe, Cr, Au, Hg ou Pb, ce qui entraîne la formation de nano-composites à partir de nanoparticules métalliques et de polyoxoborates absorbés sur le matériau utilisé.

2. Le procédé selon la revendication 1, **caractérisé en ce que** l'on utilise des nanoparticules métalliques obtenues par réduction de sels métalliques respectifs avec du borohydrure, de préférence du borohydrure de sodium.

3. Le procédé selon la revendication 1 ou la revendication 2, **caractérisé en ce qu'**en tant qu'acide, on utilise des acides organiques ou inorganiques, de préférence HCl, et en tant que base, des bases organiques et inorganiques, de préférence NaOH.

4. Le procédé selon l'une des revendications 1 à 3, **caractérisé en ce qu'**on utilise comme sel métallique bivalent CuSO₄ ou CaCl₂ et comme sel métallique trivalent FeCl₃.

5. Le procédé selon l'une des revendications 1 à 4, **caractérisé en ce que** la quantité de nanoparticules dans des nano-composites déposés sur la surface à modifier est contrôlée en modifiant le volume de solution colloïdale de nanoparticules qui est ajouté pendant le processus de modification.

6. Le procédé selon l'une des revendications 1 à 5, **caractérisé en ce que** la taille des nano-composites déposés sur la surface à modifier est contrôlée dans le processus de modification, soit en modifiant le pH dans la plage allant de plus de 0 à 10, de préférence de plus de 0 à 4, et de façon la plus préférée de moins de 2, soit en modifiant la concentration de la solution colloïdale des nanoparticules.

7. Le procédé selon l'une des revendications 1 à 6, **caractérisé en ce que** le procédé est mis en oeuvre à une température comprise entre 0°C et 100°C, de préférence à température ambiante.

8. Un matériau nano-composite obtenu par le procédé selon l'une quelconque des revendications 1 à 7, **caractérisé en ce qu'**il comprend des nanoparticules métalliques incorporées dans une matrice en polyoxoborate, tandis que la surface d'au moins certaines de ces nanoparticules est exposée.

9. Le matériau selon la revendication 8, **caractérisé en ce que** les nanoparticules métalliques comprennent des nanoparticules d'un ou plusieurs des métaux suivants : or, argent, cuivre, nickel, cobalt, platine, et de préférence or ou argent.

10. Le matériau selon la revendication 8 ou la revendication 9, **caractérisé en ce que** le matériau comprend en outre des atomes d'un ou plusieurs métaux bi- ou trivalents, et en particulier des atomes d'un des métaux suivants : Mg, Ca, Cu, Cu, Fe, Cr, Au, Hg, Pb.

11. Le matériau selon l'une quelconque des revendications 8 à 10, sous la forme d'une couche déposée sur un substrat, en particulier sur le substrat choisi dans le groupe comprenant : silicium passivé, silice, quartz, verre, métal, acier inoxydable, laine de verre, fibre de verre, papier, ouate de coton cosmétique, tissu de coton, polymères naturels, en particulier cellulose, carraghénine, pectine et chitosane, polymères synthétiques, en particulier polystyrène, poly HEMA.

12. Le matériau selon la revendication 11, **caractérisé en ce que** la couverture du substrat par ladite couche est inférieure à 100%, ce qui signifie qu'au moins une partie du substrat est découverte.

13. Utilisation du matériau nano-composite selon l'une quelconque des revendications 8 à 12 dans la fabrication de surfaces antiseptiques ou de surfaces destinées à être utilisées pour la culture de cellules mammifères.
